Europäisches Patentamt

European Patent Office

Office européen des brevets

(11) Veröffentlichungsnummer: **0 035 117**
A2

(12) **EUROPÄISCHE PATENTANMELDUNG**

(21) Anmeldenummer: 81100603.0

(22) Anmeldetag: 28.01.81

(51) Int. Cl.³: **C 08 J 3/24, C 08 J 7/06**

(30) Priorität: 26.02.80 DE 3007531

(43) Veröffentlichungstag der Anmeldung: **09.09.81**
**Patentblatt 81/36**

(84) Benannte Vertragsstaaten: **AT BE CH DE FR GB IT LI LU NL SE**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Spiess, Karl-Heinz, Wiesenstrasse 53, D-5203 Much-Schwellenbach (DE)**

(54) Formkörper aus Kunststoff mit einer peroxydisch vernetzbaren Komponente und Verfahren zu seiner Herstellung.

(57) Formkörper und Verfahren zu seiner Herstellung aus Formmasse aus Kunststoff und ggf. Füllstoffen und Zusatzstoffen, bei dem eine peroxydisch vernetzbare Komponente, in homogener Verteilung in dem Formkörper vorhanden ist und nur in einem Teil des Formkörpers mittels Peroxyd vernetzt ist.

- 1 -

Troisdorf, den 25. 2. 1980
MG/Bu

DYNAMIT NOBEL AKTIENGESELLSCHAFT
Troisdorf, Bez. Köln

Formkörper aus Kunststoff mit einer peroxydisch vernetzbaren Komponente und Verfahren zu seiner Herstellung

Die Erfindung bezieht sich auf einen Formkörper aus einer Formmasse aus Kunststoff und ggf. Füllstoffen und Zusatzstoffen, enthaltend zumindest eine peroxydisch vernetzbare Komponente. Die Erfindung befaßt sich desweiteren mit einem Verfahren zum Herstellen eines solchen Formkörpers, wobei man aus einer Formmasse aus Kunststoff und ggf. Füllstoffen und Zusatzstoffen, enthaltend zumindest eine peroxydisch vernetzbare Komponente, einen Formkörper z. B. durch Walzen, Kalandrieren, Spritzgießen, Extrudieren, Pressen, Extrusionsblasen, Beschichten, Streichen oder dgl. formt.

Es ist bekannt, Kunststoffe durch Vernetzen in ihren Eigenschaften, insbesondere physikalischen Eigenschaften zu verändern, wobei insbesondere Eigenschaften wie Festigkeit, Elastizität und auch Alterungsbeständigkeit erheblich verbessert werden können. Je nach Kunststoffen kann die Vernetzung durch Bestrahlen mit energiereichen Strahlen oder chemisch, mittels Schwefel, Selen, Tellur, Peroxyden, aromatische Polynitro- und Polyaminoverbindungen sowie Chinolderivaten durchgeführt werden.

Die auf der einen Seite mit der Vernetzung eines Kunststoffes erreichbaren positiven Eigenschaften wie Verbesserung der Festigkeit insbesondere bei erhöhter Temperatur, werden jedoch auch mit anderen nicht immer erwünschten Begleiterscheinungen erkauft, wozu insbesondere der Verlust der Schweißbarkeit bei thermoplastischen Kunststoffen gehört. Vernetzte Kunststoffe lassen sich weder thermisch noch mittels Quellschweißmitteln oder Lösungsmitteln ausreichend verschweißen. Hier sind dann in der Regel spezielle Haftvermittler erforderlich. Es gibt zahlreiche technische Anwendungsgebiete, in denen jedoch eine möglichst einfache Fügetechnik für Formkörper aus Kunststoffen wünschenswert ist, und die bei vernetzten Kunststoffen nicht angewendet werden kann. Dies ist beispielsweise das Gebiet der Dichtungsbahnen aus Kunststoffen für den Hoch- und Tiefbau, wie es beispielsweise in der DE-OS 26 28 741 umfassend dargelegt ist. Bekannte thermoplastische Dichtungsbahnen auf der Basis von Weich-Polyvinylchlorid, Polyisobutylen, Acrylpolymeren oder mit Bitumen modifizierten Thermoplasten lassen sich zwar einfach und einwandfrei an den Nahtseilen dicht verschweißen, haben jedoch den Nachteil der Temperaturempfindlichkeit, des Weichwerdens und der Neigung zum kalten Fluß. Diesen Nachteilen versucht man dann durch Auf- bzw. Einkaschieren von Verstärkungseinlagen aus z. B. Geweben oder Vliesen aus textilen Fasern oder Glasfasern entgegenzuwirken. Die auf der anderen Seite bekannten Dichtungsbahnen aus vulkanisierbaren Kunststoffen hingegen, z. B. auf Basis Chloroprenkautschuk, Äthylenpropylendienterpolymeren, chlorsulfoniertem Polyäthylenkautschuk oder Butylkautschuk genügen zwar den mechanischen Festigkeitsanforderungen und sind witterungsbeständig. Sie haben jedoch den Nachteil, daß die vulkanisierten Dichtungsbahnen sich nicht miteinander verschweißen lassen und nur schwer mittels Kleber oder Klebebänder dauerhaft dicht miteinander verbunden werden können, siehe z.B. die DE-OS 25 10 162 oder DE-AS 22 33 199.

Eine Zwischenstellung nehmen hier Dichtungsbahnen auf der Basis thermoplastischer Kunststoffe mit elastomeren Eigenschaften ein. Bei der Dichtungsbahn z.B. nach der DE-OS 26 21 825 soll die Ausvulkanisation erst nach dem Verlegen auf dem Bau und nach dem Herstellen der Nahtverbindungen zwischen den Dichtungsbahnen erfolgen; es besteht jedoch die Gefahr einer vorzeitigen Ausvulkanisation, wodurch dann das einfache Herstellen geschweißter Nahtverbindungen wiederum unmöglich gemacht ist. Darüber hinaus kann bei späteren Reparaturarbeiten ebenfalls nicht mehr geschweißt werden.

Neuerdings ist man auch dazu übergegangen, anstelle der vorangehend beschriebenen aus einem Material homogen aufgebauten einschichtigen ggf. mit einer Verstärkungseinlage versehenen Kunststoffdichtungsbahn mehrschichtige Dichtungsbahnen aus vulkanisierbaren Materialien herzustellen, wobei nur eine innere Schicht einen Vulkanisationsbeschleuniger enthält und die Außenschicht vulkanisationsbeschleunigerfrei und damit noch thermisch und/ oder durch Lösungsmittel bzw. Quellschweißmittel verschweißbar sind, siehe die DE-OS 26 28 741.

Nachteilig bei diesen mehrschichtigen Dichtungsbahnen ist einfach der erhöhte technische Aufbau, indem drei einzelne Folien hergestellt werden müssen, die in weiteren Verfahrensschritten miteinander kaschiert werden müssen, ohne daß auch hier eine zu frühzeitige Vulkanisation eintritt, um zu dem gewünschten Produkt zu kommen, das einerseits genügende mechanische Festigkeiten auch bei erhöhten Temperaturen aufweist und andererseits eine Fügetechnik durch Verschweißen zuläßt.

Jedoch auch für andere Formkörper außer Dichtungsbahnen kann es erwünscht und von Vorteil sein, daß neben den einerseits nur durch Vernetzung erreichbaren Eigenschaften eines Kunststoffes zugleich noch nur im unvernetzten Zustand des Kunststoffes vorhandene Eigenschaften vorhanden sind. In diese Richtung zielt die in der DE-AS 22 02 738 vorgeschlagene thermoplastische Mischung zum Herstellen von Formkörpern, bei der ein vulkanisierbares kautschukartiges Mischpolymerisat homogen in einer thermoplastischen Mischung verteilt ist und diese Mischung insgesamt nur partiell, d.h. nicht vollständig, ausvulkanisiert ist. Diese nicht vollständige Ausvulkanisierung wird durch einen entsprechend geringen Zusatz von Vulkanisationsmittel erreicht. Die so erhaltenen thermoplastischen Mischungen weisen noch begrenzt, thermoplastische neben elastomeren Eigenschaften auf. Die Schweißbarkeit ist jedoch auch bei diesen Mischungen nicht mehr gegeben.

Der Erfindung liegt die Aufgabe zugrunde, einen Formkörper aus Kunststoff zu schaffen, der einerseits die vorteilhaften Eigenschaften, die durch die Vernetzung eines Kunststoffes bewirkt werden, aufweist und zum anderen insbesondere die für eine einfache Fügetechnik erforderliche Schweißbarkeit der Thermoplaste ebenfalls noch besitzt. Dieses Ziel wird bei einem Formkörper der eingangs genannten Art erfindungsgemäß dadurch erreicht, daß die peroxydisch vernetzbare Komponente in homogener Verteilung in dem Formkörper vorhanden ist und in einem Teil des Formkörpers einschließend einen Teil der Oberfläche des Formkörpers peroxydisch vernetzt ist.

Der erfindungsgemäße Formkörper hat den Vorteil, daß er von einem einzigen homogenen Materialansatz ausgeht und einheitlich verarbeitet werden kann und dennoch in getrennten Bereichen einerseits die Eigenschaften des unvernetzten Kunststoffes, wie Schweißbarkeit, Elastizität

0035117

und andererseits die durch Vernetzung erzielbaren Eigenschaften des Kunststoffes wie erhöhte Festigkeit, Abriebfestigkeit, chemische Resistenz aufweist.

Die Erfindung sieht einen homogenen vernetzbaren Formkörper vor, der jedoch das Vernetzungsmittel, ein Peroxyd, nur in den Bereichen enthält, die vernetzt werden sollen. Hierbei ist der zu vernetzende Teilbereich in weiten Grenzen abhängig vom Formkörper frei wählbar. Bevorzugt ist der Formkörper ausgehend von einer Oberflächenseite über einen Teil seiner Dicke mindestens partiell vernetzt. Bei Einsatz eines im unvernetzten Zustand thermisch und/oder durch Lösungs- bzw. Quellmittel schweißbaren Kunststoffes ist dann der erfindungsgemäße Formkörper ebenfalls noch an der unvernetztverbliebenen Oberfläche thermisch und/oder durch Lösungs- bzw. Quellmittel verschweißbar, im Gegensatz zu dem vernetzten Oberflächenbereich, der durch das Vernetzen seine Schweißbarkeit verloren hat.

Als peroxydisch vernetzbare Komponente werden bevorzugt die folgenden Polymere eingesetzt:

Äthylen-Propylen-Terpolymer,
Äthylen-Propylen-Copolymer,
Naturkautschuk,
Styrol-Butadien-Kautschuk,
Polybutadien-Kautschuk,
Polyisopren-Kautschuk,
Polyäthylen,
Äthylen-Vinylacetat,
Acrylnitril-Butadien-Styrol,
Styrol-Butadien-Kautschuk Block-Copolymer,
Styrol-Isopren-Kautschuk Block-Copolymer,
Neopren-Kautschuk,
Nitril-Kautschuk,
Polysulfid-Katuschuk,

0035117

Chloriertes Polyäthylen,

Polyurethan,

Vinyliden-Copolymer,

Silikon-Kautschuk,

Vinyl-Silikon-Kautschuk,

Polyacrylat,

Chlorsulfoniertes Polyäthylen  oder

Fluorsilikon-Kautschuk.

Für die Formmasse können Abmischungen der vorgenannten Polymere untereinander sowie auch mit nicht peroxydisch vernetzungsfähigen Stoffen insgesamt eingesetzt werden. Um erfindungsgemäße Formkörper herzustellen, sollte die Formmasse mindestens 1 Gew.% einer peroxydisch vernetzbaren Komponente enthalten. Andererseits kann der Formkörper ausschließlich aus peroxydisch vernetzbare Komponente, d.h. entsprechenden Polymeren bzw. Abmischungen solcher Polymere untereinander hergestellt sein. Der Formkörper kann darüber hinaus Füllstoffe, wie beispielsweise Ruße, Kreide, Weichmacher, Stabilisatoren, Alterungsschutzmittel, Farbmittel, Gleitmittel usw. enthalten. Auch die Anwendung von Treibmitteln ist möglich, sodaß geschäumte Formkörper in der erfindungsgemäßen Ausbildung herstellbar sind. Der Formkörper selbst kann in bekannter Weise beispielsweise durch Extrudieren, Walzen, Kalandrieren, Spritzgießen, Pressen, Extrusionsblasen, Beschichten, Streichen und andere bekannte Verfahrenstechniken hergestellt werden. Der Formkörper kann auch mit weiteren Schichten bzw.Formteilen zu Mehrschichtkörpern verbunden werden.Er kann auch Verstärkungseinlagen enthalten.

Eine bevorzugte Ausführungsform des erfindungsgemäßen Formkörpers sind Flächengebilde, wie Folien, Bahnen oder Platten, insbesondere auch die Ausbildung von gegen Wassereinwirkung und Witterungseinflüssen beständigen Dichtungsbahnen aus Kunststoff. Durch die Anwendung der Erfindung ist es nämlich möglich, eine Dichtungsbahn für Abdichtungszwecke zu schaffen, die auf der einen Seite noch schweißbar ist und damit eine einfache und sichere Fügetechnik zuläßt und die im übrigen die Eigenschaften des vernetzten Kunststoffes, insbesondere Witterungsbeständigkeit und hohe Reißfestigkeit bei erhöhten Temperaturen aufweist. Für Formkörper in Gestalt von Abdichtungsbahnen werden insbesondere als Kunststoffe und auch als peroxydisch vernetzbare Kunststoffe kautschukartige Mischpolymerisate aus Äthylen-Propylen-Terpolymeren oder Äthylen-Propylen-Copolymeren bevorzugt eingesetzt.

Für den praktischen Einsatz der erfindungsgemäßen Formkörper kann es zweckmäßig sein, die vernetzte bzw. unvernetzt gebliebenen Oberflächenbereiche des Formkörpers kenntlich zu machen. Dieses kann beispielsweise dadurch geschehen, daß ein entsprechender Oberflächenbereich geprägt, bedruckt oder farblich gekennzeichnet wird.

Weitere Anwendungsgebiete der erfindungsgemäßen Formkörper sind beispielsweise Profile oder andere Gebilde wie Handläufe, Stoßfänger, Zierleisten usw., die beispielsweise mit weiteren Materialien zu einem Verbundkörper verbunden werden sollen. Hierbei kann der vernetzte Bereich des Formkörpers die der Beanspruchung zugängliche Außenseite bilden, beispielsweise mit hoher Abriebfestigkeit, während der unvernetzte Oberflächenbereich mit einer Unterkonstruktion z.B. durch Schweißen oder Kaschieren verbunden wird.

Der Erfindung liegt auch die Aufgabe zugrunde, ein Verfahren zum Herstellen des vorangehend beschriebenen erfindungsgemäßen Formkörpers vorzuschlagen. Hierbei geht man aus von einer Formmasse aus Kunststoff und ggf. Füllstoffen und Zusatzstoffen, enthaltend zumindest eine peroxydisch vernetzbare Komponente, aus der ein Formkörper z. B. durch Walzen, Kalandrieren, Spritzgießen, Extrudieren, Pressen, Extrusionsblasen, Beschichten, Streichen oder dgl. geformt wird.

Erfindungsgemäß wird nun vorgesehen, daß man mindestens auf einen Teil der Oberfläche des Formkörpers Peroxyd aufträgt, danach das Peroxyd in den Formkörper migrieren läßt bis zum Erreichen einer gewünschten Migrationstiefe in dem Formkörper, und anschließend die peroxydische Vernetzung durchführt.

Das erfindungsgemäße Verfahren hat den Vorteil, daß bei einem auch nur in einem einzigen Herstellungsvorgang fertigbaren und aus einem materialmäßig homogenen Ansatz gefertigter Formkörper nach dessen Formgebung zu einem beliebigen Zeitpunkt ein Teil desselben vernetzt werden kann, während der restliche Formkörper unvernetzt bleibt. Die erreichbare Vernetzungstiefe entsprechend der Migrationstiefe der Peroxyde ist sowohl abhängig von dem gewählten Peroxyd als auch von der Formmasse als auch von der aufgewendeten Zeit. Die Migrationsgeschwindigkeit und die Migrationstiefe sind hierbei jedoch im Sinne der Durchführung des erfindungsgemäßen Verfahrens positiv beeinflußbar, wie nachfolgend noch näher ausgeführt wird.

Eine vorteilhafte Weiterbildung des erfindungsgemäßen Verfahrens sieht vor, daß gelöstes Peroxyd aufgetragen wird. Jenachdem ob das Peroxyd bei der Verarbeitungstemperatur, sich in flüssiger oder kristalliner Phase befindet, können dem Peroxyd dasselbe lösende Lösungsmittel zugesetzt werden, vorzugsweise im Verhältnis Peroxyd zu Lösungsmittel zwischen 100 : 0 bis 40 : 50 (in Gewichtsteilen). Als Lösungsmittel für die Peroxyde kommen in Weiterbildung der Erfindung insbesondere Mittel aus der Gruppe der Extenderöle, Phlegmatisierungsmittel bzw. Weichmacher in Frage. Brauchbare Extenderöle als Lösungsmittel für das Peroxyd sind beispielsweise alkylierte Benzole sowie paraffinische und naphtenische Mineralöle. Die alkylierten Benzole mit einer verzweigten Alkylkette haben dabei den Vorteil, daß sie während der Vernetzung keine freien Radikale verbrauchen, jedoch haben sie den Nachteil einer relativ hohen Flüchtigkeit und sind insoweit weniger geeignet für Formkörper, die bei höheren Temperaturen Anwendung finden. Die hochraffinierten Mineralöle paraffinischer oder naphtenischer Art hingegen verbrauchen während der Vernetzung freie Radikale, so daß man einen erhöhten Anteil von Peroxyd bei gleichem gewünschten Vernetzungsgrad einsetzen muß. Weitere geeignete Lösungsmittel für das Peroxyd sind Phlegmatisierungsmittel oder Weichmacher, ·wobei diese identisch sein können, wie beispielsweise Dimethylphthalat oder Dibuthylphthalat.

Der Migrationsvorgang des Peroxyds in den Formkörper kann desweiteren dadurch gefördert werden, daß die Formmasse eine Komponente enthält, die in der Lage ist, das entsprechende Peroxyd zu lösen bzw. anzulösen. Erfindungsgemäß wird daher vorgeschlagen,     Peroxyde anlösende bzw. anquellende Stoffe, die ebenfalls aus der Gruppe der Extenseröle, wie alkylierte Benzole, paraffinische und naphtenische Mineralöle und/oder der Weichmacher, wie Phthalatweichmacher und/oder der vernetzbaren Monomeren, wie Acrylate, Diallylterephthalat, Triallylcyanurat, Äthylenglyc o ldimethacrylat vorzugsweise in einer Menge von 2 bis 25 Gew.% bezogen auf die Formmasse derselben vor dem Herstellen des Formkörpers zugegeben werden. Diese Mittel fördern die Migration des Peroxyds in den Formkörper und ermöglichen, innerhalb angemessener Zeit eine gewünschte Migrationstiefe zu erreichen.

Eine weitere wesentliche Verfahrensbesserung und Förderung der Migrationsgeschwindigkeit wird erfindungsgemäß dadurch erreicht, daß das Migrieren des Peroxyds durch Zufuhr von Wärme beschleunigt wird, wobei der Formkörper höchstens bis zu einer Temperatur erwärmt wird, die mindestens $20^\circ C$ unterhalb der Zersetzungstemperatur des eingesetzten Peroxydes liegt. Die Temperaturbehandlung während des Migriervorganges ist ein entscheidender Faktor zur Verkürzung der erforderlichen Migrationszeit, die je nach Formmassenzusammensetzung und gewähltem Peroxyd bei Migrationstiefen zwischen 100 bis 1000 $\mu$ nur wenige Minuten bis Stunden beträgt.

Von den bekannten Peroxyden kommen für dieses erfindungsgemäße Verfahren insbesondere die Alkylperoxyde, Perester, Diacylperoxyde oder Peroxyketale zum Einsatz. Bei der Auswahl des Peroxyds ist neben einer hohen Reaktivität zu den entsprechend gewählten vernetzbaren Polymeren, einer guten Löslichkeit in einem Lösungsmittel oder sonstigen Migrationsträgern auch auf ein möglichst niedriges Molekulargewicht zu achten. Es wurde nämlich gefunden, daß je niedriger das Molekulargewicht des gewählten Peroxyds ist, desto höher die erreichbare Migrationsgeschwindigkeit und damit die in einer angemessenen Zeit erreichbare gewünschte Migrationstiefe.

Für das Auftragen des Peroxyds bzw. der Peroxydlösung kommen die bekannten Druckverfahren, wie Kupertiefdruckverfahren, Siebdruckverfahren, Spritzverfahren und andere Auftragsverfahren wie Gießverfahren, Sprühverfahren, Streichverfahren oder Tauchverfahren je nach Formkörper und Anwendungszweck in Frage. Bevorzugt werden nach der Erfindung das Peroxyd bzw. die Peroxydlösung in einer Schicht von 15 bis 150 g/m$^2$ aufgetragen. Das Flächengewicht der aufgetragenen Schicht richtet sich hierbei auch nach den gewählten Auftragsverfahren. Mit dem erfindungsgemäßen Verfahren werden bevorzugt Oberflächenschichten von Formkörpern insbesondere auch von Flächengebilden in einer Dicke ab 100 $\mu$ bis vorzugsweise 1000 $\mu$ peroxydisch vernetzt.

Ist die gewünschte Migrationstiefe des Peroxyds in dem Formkörper erreicht, dann kann die peroxydische Vernetzung auf den in der gummiverarbeitenden Industrie gebräuchlichen Anlagen beispielsweise durchgeführt werden und zwar bei Temperaturen im Bereich zwischen 130°C und 220°C, abhängig von der jeweils eingesetzten Peroxydtype. Bei der Anwendung von Vulkanisationsverfahren ist darauf zu achten, daß unter Ausschluß von Luftsauerstoff gearbeitet wird, da sonst wegen der Sauerstoffinhibition klebrige Oberflächen des Formkörpers erhalten werden. Diese Gefahr besteht nicht bei Anwendung der Mikrowellenvulkanisation.

Nach dem erfindungsgemäßen Verfahren hergestellte Formkörper haben den Vorteil der erhöhten Reißfestigkeit bei höheren Temperaturen unter Beibehaltung der Verschweißbarkeit mit Lösungsmitteln bzw. der thermischen Verschweißbarkeit, der erhöhten Lösemittelbeständigkeit an der vernetzten Oberfläche und der erhöhten Abriebfestigkeit in diesen Bereichen.

Die Erfindung wird in der Zeichnung und an Ausführungsbeispielen näher erläutert. Es zeigen

Figur 1 einen Querschnitt durch einen plattenförmigen homogenen unvernetzten Formkörper,

Figur 2 den Querschnitt des Formkörpers nach Fig. 1 nach Vernetzung und

Figur 3 im Querschnitt eine Nahtverbindung von erfindungsgemäßen Formkörpern.

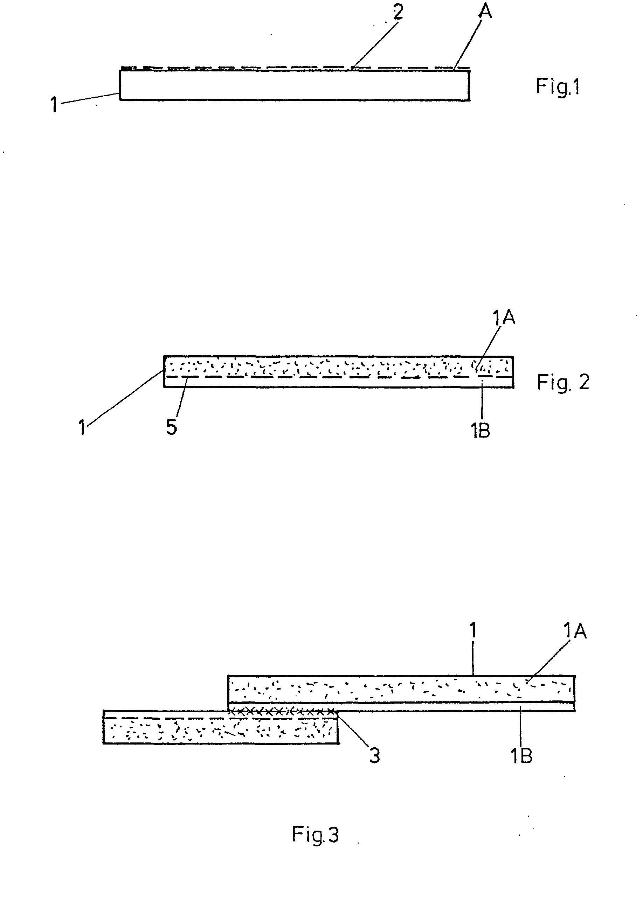

In der Figur 1 ist schematisch der Querschnitt eines plattenförmigen noch nicht vernetzten homogenen Formkörpers 1 aus einer Kunststofformmasse dargestellt, wobei in der Kunststofformmasse eine peroxydisch vernetzbare Komponente, beispielsweise ein EPDM, enthalten ist. Je nach der Funktion des Formkörpers und dem gewünschten Vernetzungsgrad kann die vernetzungsfähige Komponente zwischen 1 bis 100 Gew.% des Formkörpers 1 betragen. Aus der Darstellung nach Fig. 1 ist zu ersehen, daß auf dem plattenförmigen Formkörper nur auf einen Teil seiner Oberfläche, nämlich die Oberflächenseite A die Peroxydschicht 2 in Form einer Peroxydlösung aufgetragen ist.

Aus der Fig. 2 ist nun der erfindungsgemäß hergestellte Formkörper in seinem endgültigen Zustand zu sehen, wobei die Peroxydlösung 2 in den Formkörper 1 bis zur Tiefe 5 einmigriert ist und anschließend vernetzt ist. Der Formkörper 1 weist nunmehr den peroxydisch vernetzten Bereich 1 A und den unvernetzt gebliebenen Bereich 1 B auf. Der in dem Bereich 1 A erreichte Vernetzungsgrad hängt, wie bereits vorangehend erläutert, von den Anteilen an vernetzbarer Komponente und der Art der durchgeführten Vernetzung ab.

Werden nun für die Formkörper im unvernetzten Zustand schweißfähige, d.h. thermisch verschweißbare bzw. mit Lösungsmittel oder Quellmittel verschweißbare Kunststoffe eingesetzt, so bieten auch die erfindungsgemäß nur in Teilbereichen vernetzten Formkörper die Möglichkeit, Fügetechniken unter Zuhilfenahme von Schweißverbindungen anzuwenden. Ein Ausführungsbeispiel in Fig. 3 an einer Überlappungsnaht dargestellt. Hier werden im Überlappungs-bereich zweier Formkörper 1 die unvernetzten Oberflächenbereiche 1 B zusammengefügt und miteinander verschweißt, Schweißnaht 3.

Das Herstellen von erfindungsgemäßen Formkörpern wird anhand der nachfolgenden Beispiele dargestellt:

Beispiel 1

Herstellen einer nur über ein Teil ihrer Dicke von einer
Oberflächenseite ausgehend peroxydisch vernetzten Folie
aus Äthylen-Propylen-Terpolymer.

In einem Stempelkneter werden bei 170°C die nachfolgend
aufgeführten Rezepturbestandteile gemischt:

    100 Gew.-Teile EPDM Keltan (R)712 von DSM ,

      1 Gew.-Teil  Stearinsäure,

     60 Gew.-Teile Ruß FEF,

     40 Gew.-Teile Kieselsäureanhydrid und Kaolinit
                 (Silitin (R) )

     60 Gew.-Teile paraffinisches Mineralöl (Sunpar (R)
                 150 von Sunoil Comp.)

      5 Gew.-Teile Zinkoxyd

Zur besseren Homogenisierung wird das so erhaltene Material
weitere 10 Minuten bei 180°C auf ein Walzwerk gegeben und
danach über einen Strainer dem Kalander zugeführt. Die
dort bei 180°C mit einer Geschwindigkeit von 5 m/m in gefertigte 1,2 mm dicke Folie wird anschließend in einer
Spritzanlage einseitig mit folgender Peroxydlösung mehrmals besprüht und getrocknet:

    20 Gew.-Teile Dicumylperoxyd 95 %ig

    20 Gew.-Teile Mineralöl (Sunpar 150)

Das Auftragsgewicht beträgt ca. 50 g/m$^2$. Anschließend
wird die besprühte Folie getrocknet bei einer Temperatur
von 80°C während einer Zeit von    4   Stunden. Danach
wird die so behandelte Folie in einer Presse 20 Minuten
lang bei 180°C und einem Druck von 20 kp/cm$^2$ vulkanisiert

- 14 -

Nach Fertigstellung der Folie ist diese einseitig in einer Tiefe bis zu 800 μ vernetzt, die restliche Folie ist unvernetzt. Auf der unvernetzt gebliebenen Seite ist die Folie mit einem Testbenzin-Toluol-Gemisch schweißbar. Die erfindungsgemäß in Teilbereichen vernetzte Folie weist eine Reißfestigkeit bei 80°C von 5,9 N/mm$^2$ auf. Die vollständig unvernetzte Folie hingegen weist bei 80°C eine Reißfestigkeit von 0,12 N/mm$^2$ auf.

Beispiel 2

Unter den gleichen Verfahrenbedingungen wie in Beispiel 1 beschrieben wird aus der folgenden ungefüllten Rezeptur eine 1,0 mm dicke Folie gefertigt:

100 Gew.-Teile EPDM/BUNA (R) AP 451
der Chemischen Werke Hüls

5 Gew.-Teile Zinkoxyd

1 Gew.-Teil Stearinsäure

140 Gew.-Teile paraffinisches Mineralöl/Gulf Oil 2212

4 Gew.-Teile Polywachs 6000

Die so erhaltene Folie wird einseitig mit 30 g/m$^2$ folgender Peroxydlösung beschichtet:

50 Gew.-Teile 1,1-di.tert-butylperoxi-3,3,5-trimethyl-cyclohexan

50 Gew.-Teile Phthalatweichmacher (Butylbenzylphthalat)

Anschließend wird die so beschichtete Folie bei einer Temperatur von 60°C während 4 Stunden im Trockenschrank getrocknet und während dieser Zeit migriert das Peroxyd in die Folie ein. Danach wird die Folie in einer Presse bei 180°C, 20 kp/cm$^2$ während 20 Minuten vulkanisiert. Man erhält eine einseitig bis zu einer Tiefe von etwa 250 μ vernetzte Folie, die auf der nicht vernetzten Seite noch verschweißbar ist und die bei 80°C eine Reißfestigkeit von 1,0 N/mm$^2$ aufweist. Die noch nicht vernetzte Folie hatte eine Reißfestigkeit bei 80$^o$C von 0,09 N/mm$^2$.

Beispiel 3

Aus einer Rezeptur der folgenden Zusammensetzung wird eine Weich-PVC-Folie mit einer Dicke von 1,5 mm herge~ stellt:

    50 Gew.-Teile E-PVC, K-Wert 70
    20 Gew.-Teile Masse-PVC, K-Wert 65
    25 Gew.-Teile Benzylbutylphthalat
    1,5 Gew.-Teile Bariumcadmium-Stabilisator
    6,0 Gew.-Teile Hexandioldiacrylat
    2,0 Gew.-Teile Epoxidiertes Sojabohnenöl

Die so erhaltene Weich-PVC-Folie wird auf einer Seite mit Tert-butyl-peroxi-benzoat 30 g/m$^2$ beschichtet und anschließend bei 60$^o$C während 2 Stunden getrocknet. In dieser Zeit migriert das Peroxyd in die Folie ein. Anschließend wird die Folie für 3 Minuten einer auf 190$^o$C erhöhten Temperatur ausgesetzt und hierbei die peroxydische Vernetzung des monomeren Acrylates durchgeführt.

Man erhält eine Folie, die nur auf einer Seite in einer Schichtdicke von ca. 200 $\mu$ vernetzt ist. Auf dieser Seite ist sie wesentlich lösungsmittelbeständiger. Bei Schälversuchen ergab der anschließende Geltest in Tetrahydrofuran in der vernetzten Schicht 36 % Unlösliches, während die unvernetzte Seite voll löslich war.

Patentansprüche
==================

1. Formkörper aus Formmasse aus Kunststoff und ggfs.
Füllstoffen und Zusatzstoffen, enthaltend zumindest
eine peroxydisch vernetzbare Komponente, d a d u r c h
g e k e n n z e i c h n e t , daß die peroxydisch
vernetzbare Komponente in homogener Verteilung in dem
Formkörper vorhanden ist und in einem Teil des Formkörpers einschließend einen Teil der Oberfläche des
Formkörpers mittels Peroxyd vernetzt ist.

2. Formkörper nach Anspruch 1, dadurch gekennzeichnet,
daß er ausgehend von einer Oberflächenseite über
einen Teil seiner Dicke mindestens partiell vernetzt
ist.

3. Formkörper nach Anspruch 1 oder 2, dadurch gekennzeichnet, daß der Formkörper bei Einsatz eines im unvernetzten Zustand thermisch und/oder durch Lösungsmittel bzw. Quellmittel schweißbaren Kunststoffes im
Bereich seiner unvernetzt verbliebenen Oberfläche
schweißbar ist.

4. Formkörper nach einem der Ansprüche 1 bis 3, dadurch
gekennzeichnet, daß als peroxydisch vernetzbare
Komponente ein Äthylen-Propylen-Terpolymer-Kautschuk,
Äthylen-Propylen-Copolymer-Kautschuk, Naturkautschuk,
Styrol-Butadien-Kautschuk, Polybutadien-Kautschuk,
Polyisopren-Kautschuk, Polyäthylen, Äthylen-Vinylacetat, Acrylnitril-Butadien-Styrol, Styrol-Butadien-
Kautschuk Block-Copolymer, Styrol-Isopren-Kautschuk
Block-Copolymer, Neopren-Kautschuk, Nitril-Kautschuk,
Polysulfid-Kautschuk, Chloriertes Polyäthylen,
Polyurethan, Vinyliden-Copolymer, Silikon-Kautschuk,
Vinyl-Silikon-Kautschuk, Polyacrylat, Chlorsulfoniertes Polyäthylen oder Fluorsilikon-Kautschuk vorgesehen ist.

15. Formmasse nach einem der Ansprüche 1 bis 3, dadurch gekennzeichnet, daß mindestens 1 Gew.% peroxydisch vernetzbare Komponente in der Formmasse enthalten ist.

6. Formkörper nach einem der Ansprüche 1 bis 5, dadurch gekennzeichnet, daß Peroxyde anlösende oder anquellende Stoffe aus der Gruppe der Extenderöle, und/oder vernetzbarer Monomere und/oder der Weichmacher vorzugsweise in einer Menge von 2 bis 25 Gew.% bezogen auf die Formmasse in derselben enthalten sind.

7. Verfahren zum Herstellen eines Formkörpers nach einem der Ansprüche 1 bis 6, wobei man aus einer Formmasse aus Kunststoff und ggf. Füllstoffen und Zusatzstoffen, enthaltend zumindest eine peroxydisch vernetzbare Komponente, einen Formkörper z. B. durch Walzen, Kalandrieren, Spritzgießen, Extrudieren, Pressen, Extrusionsblasen, Beschichten, Streichen oder dgl. formt, dadurch gekennzeichnet, daß man mindestens auf einen Teil der Oberfläche des Formkörpers Peroxyd aufträgt, danach das Peroxyd in den Formkörper migrieren läßt bis zum Erreichen einer gewünschten Migrationstiefe in dem Formkörper, und anschließend die peroxydische Vernetzung durchführt.

8. Verfahren nach Anspruch 7, dadurch gekennzeichnet, daß eine Peroxydlösung aufgetragen wird.

9. Verfahren nach Anspruch 8, dadurch gekennzeichnet, daß das Verhältnis von Peroxyd zu Lösungsmittel zwischen 100 : 0 bis 40 : 50 beträgt.

10. Verfahren nach einem der Ansprüche 7 bis 9, dadurch gekennzeichnet, daß das Peroxyd bzw. die Peroxydlösung in einer Schicht von 15 bis 150 $g/m^2$ aufgetragen wird.

11. Verfahren nach einem der Ansprüche 8 bis 10, dadurch gekennzeichnet, daß das Peroxyd in einem Mittel aus der Gruppe der Extenderöle, Phlegmatisierungsmittel bzw. Weichmacher gelöst wird.

12. Verfahren nach einem der Ansprüche 7 bis 11, dadurch gekennzeichnet, daß die Peroxyde anlösende bzw. anquellende Stoffe aus der Gruppe der Extenderöle, wie alkylierte Benzole, paraffinische und naphtenische Mineralöle, und/oder der vernetzbaren Monomere wie Acrylate, Diallylphtalat, Triallylcyanurat, und/oder der Weichmacher, wie Phtalatweichmacher, vorzugsweise in einer Menge von 2 bis 25 Gew.% bezogen auf die Formmasse derselben vor dem Herstellen des Formkörpers zugegeben werden.

13. Verfahren nach einem der Ansprüche 7 bis 12, dadurch gekennzeichnet, daß das Migrieren des Peroxyds durch Zufuhr von Wärme beschleunigt wird, wobei der Formkörper höchstens bis zu einer Temperatur erwärmt wird, die mindestens 20° C unterhalb der Zersetzungstemperatur des eingesetzten Peroxyds liegt.

14. Verfahren nach einem der Ansprüche 7 bis 13, dadurch gekennzeichnet, daß als Peroxyde Alkylperoxyde, Perester, Diacylperoxyde oder Peroxyketane eingesetzt werden.

15. Verfahren nach einem der Ansprüche 7 bis 14, dadurch gekennzeichnet, daß von den Peroxyden diejenigen mit den niedrigen Molekulargewichten eingesetzt werden.

16. Verfahren nach einem der Ansprüche 7 bis 15, dadurch gekennzeichnet, daß das Peroxyd bzw. die Peroxydlösung im Druckverfahren, wie Kupfertiefdruck, Siebdruck oder Spritzdruck, Gieß- Sprüh- oder Streich- oder Tauchverfahren aufgebracht wird.

- 4 -

17. Verfahren nach einem Ansprüche 7 bis 16, dadurch gekennzeichnet, daß der Formmasse als peroxydisch vernetzbare Komponente ein Äthylen-Propylen-Terpolymer-Kautschuk, Äthylen-Propylen-Copolymer-Katuschuk, Naturkautschuk, Styrol-Butadien-Kautschuk, Polybutadien-Kautschuk, Polyisopren-Kautschuk, Polyäthylen, Äthylen-Vinylacetat, Acrylnitril-Butadien-Styrol, Styrol-Butadien-Kautschuk Block-Copolymer, Styrol-Isopren-Kautschuk, Polysulfid-Kautschuk, Chloriertes Polyäthylen, Polyurethan, Vinyliden-Copolymer, Silikon-Kautschuk, Vinyl-Silikon-Kautschuk, Polyacrylat, chlorsulfonieres Polyäthylen oder Fluorsilikon-Kautschuk zugegeben wird.

0035117

1/1

Fig.1

Fig. 2

Fig.3

Dynamit Nobel Aktiengesellschaft, Troisdorf